# EUROPÄISCHE PATENTSCHRIFT

(11) **EP 1 214 628 B1**
(45) Veröffentlichungstag und Bekanntmachung des Hinweises auf die Patenterteilung: **26.11.2003**
(21) Anmeldenummer: 00962455.2
(22) Anmeldetag: 07.09.2000
(51) Int. Cl.: G03B 27/52

(54) **VORRICHTUNG, VERFAHREN UND SYSTEM ZUM ERZEUGEN VON BILDERN**
DEVICE, METHOD AND SYSTEM FOR GENERATING IMAGES
DISPOSITIF, PROCEDE ET SYSTEME POUR PRODUIRE DES IMAGES

(30) Priorität: 07.09.1999 DE 19942528
(43) Veröffentlichungstag der Anmeldung: 19.06.2002
(73) Patentinhaber: Agfa-Gevaert AG, 51373 Leverkusen (DE)
(72) Erfinder: RAUH, Hans-Jürgen, 82064 Strasslach-Hailafing (DE); SCHINDLER, Hans-Georg, 83607 Holzkirchen (DE); STROMMER, Norbert, 86972 Altenstadt (DE)
(86) Internationale Anmeldenummer: EP0008759
(87) Internationale Veröffentlichungsnummer: WO01018601

(56) Entgegenhaltungen:
- US-A- 4 088 404
- US-A- 4 239 377
- US-A- 4 520 497

## Beschreibung

Die vorliegende Erfindung betrifft eine Vorrichtung und ein Verfahren zum Erzeugen von Bildern gemäß der Oberbegriffe der Ansprüche 1 und 4 bzw. der Ansprüche 13 und 14 sowie ein System zum Herstellen von Bildern nach den Ansprüche 15 und 18.

Für ein Erzeugen und Herstellen von Bildern werden insbesondere sogenannte Hochleistungsprinter eingesetzt, mit denen Bildinformationen mit sehr hoher Geschwindigkeit auf fotografisches Aufzeichnungsmaterial aufbelichtet werden können. Das verwendete fotografische Aufzeichnungsmaterial ist üblicherweise bandförmiges Fotopapier, das dem Hochleistungsprinter in Rollenform aus einer Kassette heraus zugeführt wird. Nachdem die Bildinformationen, die mehreren Bildern zugeordnet sind, auf das bandförmige Aufzeichnungsmaterial aufbelichtet wurden, werden die auf das bandförmige Aufzeichnungsmaterial aufgebrachten mehreren Bilder in einem nachgeordneten Verarbeitungsschritt in einer Schneidvorrichtung in einzelne Bilder geschnitten. Dazu werden auf dem bandförmigen Aufzeichnungsmaterial Marken aufgebracht, die von der Schneidvorrichtung zum Schneiden des bandförmigen Aufzeichnungsmaterials in die einzelnen Bilder verwendet werden.

Aus der US 4,088,404 ist bekannt, Bildvorlagen, die auf Fotonegativen enthalten sind, mittels einer Ausgabeeinheit auf das bandförmige fotografische Aufzeichnungsmaterial auszugeben. Die Ausgabeeinheit ist bei der aus dieser Patentschrift bekannten Vorrichtung eine Belichtungseinheit, mit der die einzelnen Fotonegative über einen Belichtungsstrahlengang nacheinander auf Fotopapier aufbelichtet werden. Die bekannte Vorrichtung enthält ein getrenntes Markierungsmittel, mit dem die für das Schneiden verwendeten Marken auf das Aufzeichnungsmaterial aufgebracht werden. Dieses Markierungsmittel ist der Ausgabeeinheit nachgeordnet, so dass zunächst ein einzelnes Bild auf das bandförmige Aufzeichnungsmaterial aufbelichtet, dann die entsprechende zum Schneiden verwendbare Marke hinter das bereits aufbelichtete Bild aufgebracht und anschließend das nächste Bild hinter die aufgebrachte Marke aufbelichtet wird. Als Markierungsmittel werden gemäß der US 4,088,404 sowohl eine Stanze zum Ausstanzen von Löchern oder Kerben aus dem bandförmigen Aufzeichnungsmaterial als auch ein zusätzlicher Belichter, mit dem die Marken auf das bandförmige Aufzeichnungsmaterial aufbelichtet werden können, eingesetzt. Die bekannte Vorrichtung verwendet somit ein gesondertes Markierungsmittel, mit dem ausschließlich die Marken in Abhängigkeit von einem zuvor aufbelichteten Bild aufgebracht werden. Insbesondere ist eine umständliche Anpassung der Funktion des Markierungsmittel und dessen Aufbringen der Marke an das zuvor vorgenommene Aufbelichten eines Bildes mittels der getrennten Belichtungseinheit notwendig.

In letzter Zeit werden als Ausgabeeinheit zum Ausgeben von Bildinformationen zunehmend digitale Belichtungseinheiten eingesetzt. Eine solche Belichtungseinheit ist beispielsweise aus der EP 0 922 993 A1 bekannt. Die bekannte Belichtungseinheit weist Laser auf, mit denen bandförmiges Aufzeichnungsmaterial belichtet wird. Den Lasern werden digitale Bilddaten zugeführt, die die aufzubelichtenden Bildinformationen enthalten. Aus der EP 0 922 993 A1 ist ebenfalls bekannt, dass das bandförmige Aufzeichnungsmaterial, auf das die Bildinformationen von mehreren Bildern aufbelichtet wurden, in einem nachfolgenden Verarbeitungsschritt in die einzelnen Bilder beschnitten wird. Wie das Schneiden des bandförmigen Aufzeichnungszeichnungsmaterials innerhalb der Schneidevorrichtung erfolgt, wird nicht beschrieben.

Aus der EP 0 947 880 A1 sind ein Verfahren und eine Vorrichtung zum Ausgeben von Bildinformationen auf bandförmiges Aufzeichnungsmaterial und zum Schneiden dieses bandförmigen Aufzeichnungsmaterials bekannt. Dabei sollen bereits beim Ausgeben der Bildinformationen auf das Aufzeichnungsmaterial vorhandene Daten bezüglich der Bilder oder mehrerer zu einer Gruppe zusammengefaßter Bilder maschinell lesbar mit auf das Aufzeichnungsmaterial aufgebracht werden. Diese Daten werden in Form von speziellen Marken, beispielsweise durch einen Barcode, mittels der gleichen Ausgabeeinheit auf das Aufzeichnungsmaterial ausgegeben, die die Bildinformationen ausgibt. Diese Marken, d. h. solche Barcodes, enthalten insbesondere Informationen über die Höhe und Breite der jeweiligen Bilder. Bei der bekannten Vorrichtung und dem bekannten Verfahren werden üblicherweise mehrere Bilder nebeneinander auf das bandförmige Aufzeichnungsmaterial ausgegeben. In den Barcodes ist daher des Weiteren die Anzahl der nebeneinander angeordneten Bilder sowie deren Positionen relativ zu einem Referenzpunkt, wie z. B. dem Bandlängsrand, angegeben. Die Barcodes können von einem nachgeschalteten Schneidegerät gelesen und ausgewertet werden. Dadurch soll eine individuelle Einstellung des Schneidegerätes für jedes Bild oder für jede Bildergruppe ermöglicht werden, so dass ein genaues Ausschneiden der einzelnen Bilder möglich wird. Um mögliche Einflüsse beim Transport des bandförmigen Aufzeichnungsmaterials zu kompensieren oder Temperaturschwankungen auszugleichen, die zu einer Verlängerung oder Verkürzung des Aufzeichnungsmaterials führen können, sollen zusätzlich zu den Barcodes maschinell lesbare Bildendemarkierungen aufgebracht werden, die genau am Ende eines Bildes oder einer Bildergruppe auf das Aufzeichnungsmaterial ausgegeben werden. Durch das Lesen der Bildendemarkierungen wird dann eine Korrektur der in dem Barcode enthaltenen Angaben über die Position der einzelnen Bilder oder Bildergruppen vorgenommen. Bei der bekannten Vorrichtung und dem bekannten Verfahren sind somit umständliche Berechnungen der einzelnen Positionen, an denen das bandförmige Aufzeichnungsmaterial geschnitten werden soll, über die Korrektur der in dem Barcode enthaltenen Informationen mittels der Bildendemarkierungen nötig.

Es ist weiterhin allgemein bekannt, dass zum Kalibrieren der Ausgabeeinheit zum Ausgeben von Bildinformationen in regelmäßigen Abständen sogenannte Testbilder mit Testinformationen auf das Aufzeichnungsmaterial ausgegeben werden. Den Testinformationen zugeordnet werden Marken in das Aufzeichnungsmaterial eingebracht, die zusätzliche Informationen über die Art der Testinformationen enthalten. Diese Marken zum Kennzeichnen der Testinformationen werden üblicherweise als Löcher mittels einer Stanze in das Aufzeichnungsmaterial eingestanzt. Die Marken können beispielsweise Informationen über das Format des Aufzeichnungsmaterials oder die Zeit, während der die Testinformationen auf das Aufzeichnungsmaterial aufgebracht werden, enthalten. Mittels der Testinformationen kann dann das Ausgeben von Bildinformationen mittels der Ausgabeeinheit verbessert werden, indem die Einstellungen der Ausgabeeinheit überprüft und verändert werden. Durch das Einstanzen der Markierungen zum Kennzeichnen der Testinformationen wird der Papierverbrauch erhöht. Des Weiteren fällt durch das Ausstanzen des Aufzeichnungsmaterials Abfall an, der störend ist.

Der vorliegenden Erfindung liegt die Aufgabe zugrunde, ein einfaches und aufwandsarmes Erzeugen von Bildern und Marken auf bandförmigem Aufzeichnungsmaterial und somit ein effektives Herstellen von Bildern zu ermöglichen.

Diese Aufgabe wird gemäß der technischen Lehre des Anspruchs 1, 4, 13, 14, 15 oder 18 gelöst.

Aufgrund der vorliegenden Erfindung können sowohl die Bildinformationen, die den mehreren Bildern zugeordnet sind, als auch die unmittelbar für ein Schneiden des bandförmigen Aufzeichnungsmaterials verwendbaren Marken mittels ein und derselben Ausgabeeinheit auf das bandförmige Aufzeichnungsmaterial aufgebracht werden. Dadurch können auf einfache Weise mittels ein und derselben Ausgabeeinheit zwei für das Herstellen der Bilder relevante Funktionen realisiert werden. Mit der Ausgabeeinheit können die zum Schneiden verwendbaren Marken sehr exakt an die ausgegebenen Bildinformationen angepaßt werden. Bei dem nachfolgenden Schneidevorgang kann daher das bandförmige Aufzeichnungsmaterial sehr exakt, ohne großen Papiervertust, in die einzelnen Bilder geschnitten werden. Insbesondere ist ein aufwändiges Berechnen mittels umständlicher Korrekturvorgänge nicht erforderlich.

Aufgrund der vorliegenden Erfindung können des Weiteren neben den Bildinformationen, die den mehreren Bildern zugeordnet sind, ebenfalls mittels der gleichen Ausgabeeinheit sowohl Testinformationen, mit denen die Ausgabe der Bildinformationen überprüfbar ist, als auch Marken auf das bandförmige Aufzeichnungsmaterial aufgebracht werden, die zum Kennzeichnen der Testinformationen verwendet werden sollen. Auch hier können daher auf einfache Weise mittels ein und derselben Ausgabeeinheit mehrere für das Herstellen von Bildern relevante Funktionen realisiert werden. Es ist somit auf einfache Weise möglich, eine Überprüfung des Ausgebens von Bildinformationen effektiv durchzuführen und dabei eine gute Qualität des Erzeugens von Bildern zu gewährleisten.

In einer besonders vorteilhaften Ausgestaltung der Erfindung sind die zum Schneiden verwendbaren Marken, die von der Ausgabeeinheit auf das bandförmige Aufzeichnungsmaterial aufgebracht werden, als sogenannte codierte Marken ausgestaltet. Solche codierten Marken enthalten weitere zusätzliche Informationen, die zum Herstellen von Bildern verwendet werden können. Insbesondere für die Verwaltung und die Auftragsabwicklung in einem Fotofinishing-Labor, in dem solche Bilder hergestellt werden, sind zusätzliche Informationen auf dem bandförmigen Aufzeichnungsmaterial vorteilhaft. Solche zusätzlichen Informationen können beispielsweise Auftrags-Identifikationsnumoder Identifikationsnummern für die Kennzeichnung des jeweiligen bandförmigen Aufzeichnungsmaterials sein. Die codierten Marken können insbesondere auch als Auftragsanfangs- oder Auftragsendemarke ausgestaltet sein. Mit der Auftragsanfangs- bzw. Auftragsendemarke wird das erste Bild eines Auftrags bzw. das letzte Bild eines Auftrags gekennzeichnet. Auftragsanfangs- oder Auftragsendmarke können bei einem dem Schneidevorgang nachfolgenden Sortiervorgang zum Sortieren der einzelnen geschnittenen Bilder verwendet werden. In einer solchen einzelnen codierten Marke können daher gleichzeitig mehrere unterschiedliche Informationen enthalten sein, mit denen sich das Herstellen von Bildern wesentlich vereinfachen läßt.

In einer weiteren vorteilhaften Ausgestaltung der Erfindung können die Marken, die für das Kennzeichnen von Testinformationen verwendbar sind, wenigstens eine Information enthalten, die zum Identifizieren der Vorrichtung, mittels der die Testinformationen und die Marke auf das bandförmige Aufzeichnungsmaterial aufgebracht wurden, ermöglicht wird.?? Dadurch ist auf einfache Weise eine eindeutige Zuordnung der ausgegebenen Testinformationen zu der Vorrichtung, die die Testinformationen ausgegeben hat, gewährleistet.

In einer weiteren, besonders vorteilhaften Ausgestaltung der Erfindung werden mittels ein und derselben Ausgabeeinheit sowohl die zum Schneiden verwendbaren Marken als auch diejenigen, die zum Kennzeichnen von Testinformationen verwendbar sind, und diese Testinformationen selbst ausgegeben. Das Ausgabemittel kann daher innerhalb der erfindungsgemäßen Vorrichtung besonders effektiv zum Herstellen von Bildern eingesetzt werden. Zusätzliche Ausgabeeinheiten, auf die die Funktionalitäten der Vorrichtung - und damit die Ausgabe der verschiedenen Marken und Informationen - verteilt werden könnte, sind somit nicht erforderlich.

Aufgrund der vorliegenden Erfindung ist es ebenfalls möglich, in einem System mehrere der Vorrichtungen zum Erzeugen von Bildern vorzusehen. Jede dieser Vorrichtungen ist dabei in der Lage, Testinformationen auf das bandförmige Aufzeichnungsmaterial auszugeben. Das erfindungsgemäße System enthält zum Auswerten dieser verschiedenen Testinformationen ein Auswertemittel. Vorteilhafterweise kann dieses Auswertemittel für das Auswerten der von den verschiedenen Vorrichtungen stammenden Testinformationen eingesetzt werden. Aufgrund der den Testinformationen beigefügten Marken zum Kennzeichnen der Testinformationen kann eine eindeutige Zuordnung der Testinformationen zu derjenigen Vorrichtung erfolgen, die die jeweilige Testinformation auf das Aufzeichnungsmaterial ausgegeben hat.

In einer besonders vorteilhaften Ausgestaltung des erfindungsgemäßen Systems sind die verschiedenen Vorrichtungen zum Erzeugen von Bildern sowie das Auswertemittel über ein Netzwerk miteinander verbunden. Das erfindungsgemäße System kann zudem ein Steuermittel enthalten, mit dem das Einstellen der Ausgabe von Bildinformationen durch die verschiedenen Vorrichtungen des Systems aufgrund der ausgewerteten Testinformationen gesteuert werden kann.

Einfachheitshalber weist die Ausgabeeinheit Laser auf, mit denen sowohl die Bildinformationen als auch die Marken auf das Aufzeichnungsmaterial aufgebracht werden. Solche Laser sind sehr exakt ansteuerbar, so dass das Aufbringen der Marke besonders exakt an das Aufbringen der Bildinformationen angepaßt werden kann. Die jeweilige zum Schneiden verwendbare Marke kann insbesondere in einen Bildsteg auf das bandförmige Aufzeichnungsmaterial aufgebracht werden, der zwischen zwei unmittelbar nebeneinander benachbarten Bilder auf dem Aufzeichnungsmaterial angeordnet ist. Die Schneidmarke kann somit unmittelbar an den Rand eines ausgegebenen bzw. noch auszugebenden Bildes aufgebracht werden.

Weitere vorteilhafte Ausgestaltungen der Erfindung können den abhängigen Ansprüchen entnommen werden. Im folgenden werden die Erfindung und ihre Vorteile anhand von Ausführungsbeispielen und den Zeichnungen beschrieben. Es zeigen:
- Fig. 1: ein Ausführungsbeispiel der Erfindung in einem System zum Herstellen von Bildern,
- Fig. 2: ein Beispiel eines Auszugs aus einem bandförmigen Aufzeichnungsmaterial, auf das Marken aufgebracht sind,
- Fig. 3: ein weiteres Beispiel eines Auszugs aus dem bandförmigen Aufzeichnungsmaterial, auf das Marken aufgebracht sind, die als codierte Marken ausgestaltet sind,
- Fig.4: ein drittes Beispiel eines Auszugs aus einem bandförmigen Aufzeichnungsmaterial, auf das Testinformationen sowie eine Marke zur Kennzeichnung dieser Testinformationen aufgebracht sind, und
- Fig. 5: ein Ausführungsbeispiel eines erfindungsgemäßen Systems zum Herstellen von Bildern.

Im folgenden werden für gleiche oder gleich wirkende Elemente durchweg gleiche Bezugszeichen verwendet.

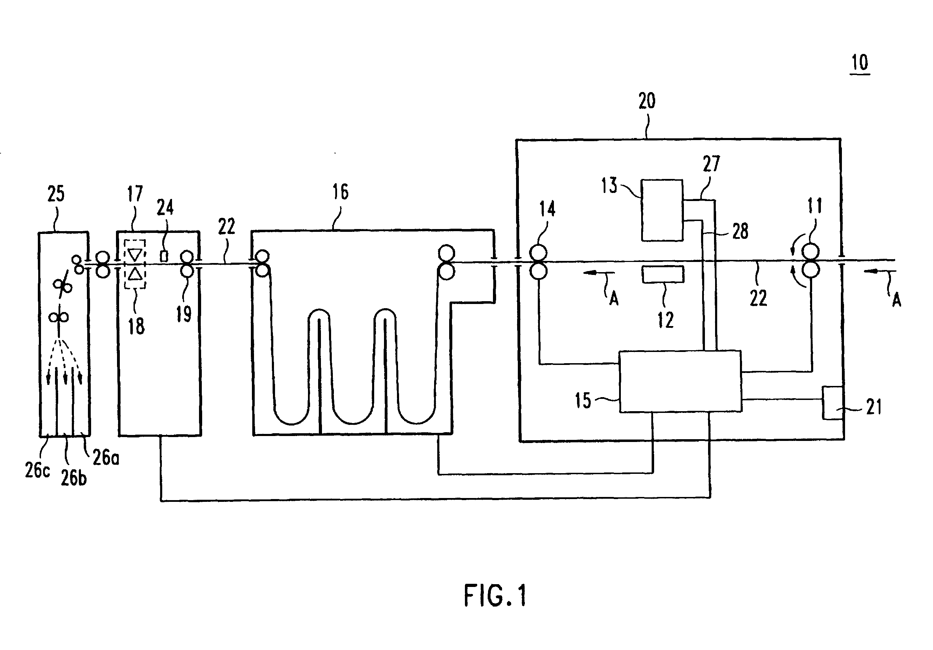

Fig. 1 zeigt das Ausführungsbeispiel eines Systems 10 zum Herstellen von Bildern. Mit diesem System können Bildinformationen, die in Form von digitalen Bilddaten vorliegen, auf Fotopapier 22 aufbelichtet werden. Das Fotopapier 22 stellt hier bandförmiges Aufzeichnungsmaterial dar, das in Rollen aufgewickelt ist. Zum Belichten des Fotopapiers 22 enthält das System 10 einen Printer 20 mit einer digitalen Belichtungseinheit 13, der die digitalen Bilddaten mit den aufzubelichtenden Bildinformationen zugeführt werden. Die Belichtungseinheit 13 enthält im vorliegenden Ausführungsbeispiel Laser, mit denen drei Laserstrahlen in den roten, grünen und blauen Wellenlängenbereichen des Spektrums erzeugt werden. Diese Laserstrahlen werden mittels eines Modulators mit den Eildinformationen moduliert. Die Belichtungseinheit 13 stellt hier eine Ausgabeeinheit zum Ausgeben von Bildinformationen dar. Als eine solche Ausgabeeinheit zum Belichten des Fotopapiers 22 können auch andere Belichtungsmittel, wie z. B. LEDs, eingesetzt werden. Es ist auch möglich, als Ausgabeeinheit zum Ausgeben von Bildinformationen Tintenstrahler zu verwenden. Mit solchen Tintenstrahlern kann Papier beschrieben werden. Dieses Papier ist vorteilhafterweise besonders für das Beschreiben mit Tinte ausgestaltet. Unter dem Begriff Ausgabeeinheit zum Ausgeben der Bildinformationen auf das bandförmige Aufzeichnungsmaterial sollen daher hier sowohl Belichtungseinheiten, wie z. B. Laser, als auch Beschreibungseinheiten, wie z. B. Tintenstrahler, verstanden werden.

Das in Rollenform aufgewickelte bandförmige Fotopapier 22 ist in einer Kassette vorhanden, die an den Printer 20 angedockt ist. Das bandförmige Fotopapier 22 wird dem Printer in einer Transportrichtung A zugeführt. Hinter dem Eingang des Printers 20 ist ein erstes Transportrollenpaar 11 angeordnet, das zwei übereinander angeordnete, drehbar gelagerte Rollen aufweist, zwischen denen das bandförmige Fotopapier 22 hindurchgeführt ist. Mittels des Transportrollenpaares 11 wird das Fotopapier 22 in dem Printer 20 in Richtung der Belichtungseinheit 13 transportiert. Das Transportrollenpaar 11 ist mit einem Steuermittel 15 verbunden, mit dem der gesamte Ablauf zum Erzeugen eines Bildes innerhalb des erfindungsgemäßen Printers 20 gesteuert werden kann. Das Transportrollenpaar 11 erhält von dem Steuermittel 15 individuelle Steuersignale, mit denen die Transportgeschwindigkeit des Fotopapiers 22 eingestellt werden kann.

Unterhalb der Belichtungseinheit 13 ist innerhalb des Printers 20 eine Papierbühne 12 angeordnet. Diese Papierbühne 12 dient zum Führen des Fotopapiers 22 während des Belichtens mittels der Belichtungseinheit 13. Am Ausgang des Printers 20 ist ein zweites Transportrollenpaar 14 angeordnet, das ebenfalls zwei übereinander angeordnete Rollen aufweist, die drehbar gelagert sind und zum Transport des bandförmigen Fotopapiers 22 dienen. Das Transportrollenpaar 14 ist ebenfalls mit dem Steuermittel 15 verbunden und erhält von diesem Ansteuersignale zum Einstellen der Drehgeschwindigkeiten der Rollen und damit der Transportgeschwindigkeit des Fotopapiers 22.

Der Printer 20 weist weiterhin eine Eingabeschnittstelle 21 auf, an der dem Printer 20 die digitalen Bilddaten mit den aufzubelichtenden Bildinformationen zugeführt werden können. Die digitalen Bilddaten mit den Bildinformationen können von einem herkömmlichen Scanner stammen, der die Bildinformationen von auf einem fotografischen Film enthaltenen einzelnen Bildern liest und in digitale Bilddaten wandelt. Es ist aber ebenso möglich, dass die digitalen Bilddaten auf Diskette, CD-ROM, etc. gespeichert sind und die Eingangsschnittstelle 21 ein entsprechendes Lesemittel zum Lesen eines solchen Mediums enthält. Des weiteren kann die Eingangsschnittstelle 21 mit einem öffentlichen Datennetzwerk, wie beispielsweise dem Internet, verbunden sein, über das dem Printer 20 die digitalen Bilddaten direkt von einer entfernt liegenden, an das Internet angeschlossenen Eingabestation zugeführt werden können. Die Eingabeschnittstelle 21 ist mit dem Steuermittel 15 verbunden und leitet die digitalen Bilddaten und evtl. zusätzlich empfangene Begleitdaten an das Steuermittel 15 weiter. Solche Begleitdaten können beispielsweise das gewünschte Format für die Herstellung der Bilder enthalten. Das Steuermittel 15 bereitet die an der Eingabeschnittstelle 21 empfangenen Bilddaten vorteilhafterweise auf. Durch diese Aufbereitung kann die Belichtung mittels der Belichtungseinheit 13 an die Eigenschaften des verwendeten Fotopapiers 22 angepaßt werden.

Über eine Verbindung 27 ist das Steuermittel 15 mit der Belichtungseinheit 13 verbunden. Das Steuermittel 15 übermittelt über diese Verbindung 27 die aufbereiteten Bilddaten an die Belichtungseinheit 13. Da die aufbereiteten Bilddaten genau diejenige Bildinformation enthalten, die auf das bandförmige Fotopapier 22 aufbelichtet sollen, werden die von der Belichtungseinheit 13 emittierten Laserstrahlen mittels dieser Bilddaten moduliert. Das Steuermittel 15 ist über eine weitere Verbindung 28 mit der Belichtungseinheit 13 verbunden. Über diese weitere Verbindung 28 erhält die Belichtungseinheit 13 Ansteuersignale von dem Steuermittel 15, die zum Aufbelichten von Marken auf das bandförmige Fotopapier 22 mittels der Belichtungseinheit 13 dienen. Diese Marken werden zum späteren Schneiden des Fotopapiers 22 in einzelne Bilder verwendet. Die Verbindungen 27 und 28 können ebenso als eine einzige Verbindung zwischen dem Steuermittel 15 und der Belichtungseinheit 13 realisiert werden. Sowohl die aufzubelichtenden Bilddaten als auch die Ansteuersignale für das Aufbelichten der Marke können dann über diese einzige Verbindung von dem Steuermittel 15 an die Belichtungseinheit 13 übermittelt werden.

Die von dem Steuermittel 15 erzeugten und über die weitere Verbindung 28 an die Belichtungseinheit 13 übermittelten Ansteuersignale für das Aufbelichten der Marken werden hier so übermittelt, dass unmittelbar nach dem Aufbelichten der Bildinformationen eines Bildes die Marke direkt an den Rand des aufbelichteten, latenten Bildes aufgebracht wird. Durch diese unmittelbare Anpassung der Marke an die Aufbelichtung des Bildes auf das bandförmige Fotopapier 22 entsteht zwischen zwei nebeneinander auf dem Fotopapier 22 erzeugten latenten Bildern nur ein äußerst schmaler Steg. Die zwei nebeneinander erzeugten latenten Bilder können im Grunde genommen direkt nebeneinander aufgebracht werden, da die zum Schneiden verwendbare Marke sehr schmal ausgestaltet werden kann. Das Belichtungsmittel 13 ist in der Lage, eine solch schmale Marke auf dem Fotopapier 22 zu erzeugen. Entsprechend muß eine Schneidevorrichtung, die zum nachfolgenden Schneiden des bandförmigen Fotopapiers 22 dient, diese schmale Marke exakt detektieren können. Dadurch kann gewährleistet werden, dass von den auf das bandförmige Fotopapier 22 aufbelichteten Bildern keine an deren Rändern vorhandenen Bildinformation durch das Schneiden in die einzelnen Bilder verlorengeht. Alternativ ist es ebenso möglich, zuerst die jeweilige zum Schneiden verwendbare Marke und anschließend das zugehörige Bild mittels der Belichtungseinheit 13 aufzubringen.

Dem Printer 20 nachfolgend ist eine Entwicklungsvorrichtung in Form eines Papierprozessors 16, mit dem das belichtete Fotopapier 22 entwickelt werden kann. Die in dem Fotopapier 22 enthaltenen latenten Bilder werden in dem Papierprozessor 16 fixiert und stabilisiert, so dass am Ausgang des Papierprozessors 16 eine Vielzahl von einzelnen fotografischen Bildern auf dem bandförmigen Fotopapier 22 enthalten sind.

In Papiertransportrichtung hinter dem Papierprozessor 16 ist eine Schneidevorrichtung 17 angeordnet, mit der das bandförmige entwickelte Fotopapier 22 in einzelne Bilder geschnitten werden kann. Dazu wird das von dem Papierprozessor 16 ausgegebene Fotopapier 22 in die Schneidevorrichtung 17 eingeführt. Zum Transport des bandförmigen Fotopapiers innerhalb der Schneidevorrichtung 17 dient ein weiteres Transportrollenpaar 19, das direkt am Eingang der Schneidevorrichtung 17 angeordnet ist. Die Schneidevorrichtung 17 enthält ein Messer 18, mit dem das bandförmige Fotopapier in Längs- und Querrichtung geschnitten werden kann. Aus dem bandförmigen Fotopapier 22 werden mittels des Messers 18 die gewünschten einzelnen Bilder herausgeschnitten. Das Messer 18 ist hier ein Einklingenmesser, mit dem das bandförmige Fotopapier 22 genau an der Stelle geschnitten werden kann, an der die Marke auf dem Fotopapier 22 vorhanden ist. Das Messer 18 kann hier ein Einklingenmesser sein, da die Marke sehr schmal erzeugt wurde, so dass im wesentlichen kein Rand zwischen zwei nebeneinander auf dem Fotopapier 22 erzeugten Bildern vorhanden ist. Das Messer 18 kann aber auch ein Zweiklingenmesser sein, mit dem mit einem einzigen (Doppel-)Schnitt die gesamte Marke und eventuell vorhandene Bildränder weggeschnitten werden.

Zwischen dem Transportrollenpaar 19 und dem Messer 18 ist ein Sensor 24 vorhanden. Dieser Sensor 24 dient als Detektionsmittel zum Detektieren der von der Belichtungseinheit 13 auf das Fotopapier 22 aufbelichteten Marken. Das entwickelte bandförmige Fotopapier 22 wird entlang dem Sensor 24 geführt. Wird von dem Sensor 24 ein Loch detektiert, so wird diese Information dazu verwendet, mittels des Messers 18 das Fotopapier 22 zu schneiden. Der Sensor 24 wird vorteilhafterweise unmittelbar vor dem Messer 18 angeordnet, damit der Schneidevorgang möglichst genau an die erkannte Position der Marke angepaßt ist. Da das Belichten des Fotopapiers mit den Bildinformationen sehr genau an das Aufbelichten der Marke mittels der Belichtungseinheit 13 in dem Printer 20 angepaßt ist, kann eine ebensolche Anpassung des Schneidens an die Detektion der Marke innerhalb der Schneidevorrichtung 17 zu einer optimalen Ausnutzung des Fotopapiers für das Aufbelichten von mehreren Bildern führen. Der beim Schneiden des Fotopapiers in die einzelnen Bilder anfallende Papierverlust, der aufgrund des Wegschneidens von Rändern und der Marken entstehen kann, kann somit sehr gering gehalten werden. Bei sehr genauer Positionierung der von der Belichtungseinheit 13 gesetzten Marken ist es möglich, die einzelnen Bilder schon beim Belichten mittels der Belichtungseinheit 13 unmittelbar an die Marken heranzusetzen. Bei entsprechender genauer Detektion der Marke in der Schneidevorrichtung 17 kann somit das bandförmige Fotopapier so exakt geschnitten werden, dass es nicht notwendig ist, eventuell einen Teil der Bildinformation am Rand des Einzelbildes wegschneiden zu müssen, um einen nicht erwünschten Bildrand zu vermeiden. Der Sensor 24 kann beliebig ausgestaltet werden, sofern gewährleistet ist, dass die Marken mit sehr hoher Sicherheit erkannt werden. Das Detektionsmittel innerhalb der Schneidevorrichtung 17 ist an die Art der durch Belichtungseinheit 13 auf das Fotopapier 22 aufgebrachten Marken angepaßt.

Die von der Schneidevorrichtung 17 erzeugten einzelnen Bilder werden nun aus der Schneidevorrichtung 17 ausgegeben und von weiteren Transportrollenpaaren einer Sortiereinrichtung 25 zugeführt. In dieser Sortiereinrichtung 25 werden die einzelnen Bilder sortiert. Dazu enthält die Sortiereinrichtung 25 im vorliegenden Ausführungsbeispiel gemäß der Fig. 1 mehrere Sortierfächer 26a, 26b und 26c. Von einem in der Sortiervorrichtung 25 enthaltenen, nicht näher bezeichneten Verteilmittel werden die einzelnen Bilder auf die einzelnen Sortierfächer 26a, 26b, 26c verteilt. Das Verteilen der einzelnen Bilder hängt dabei von Informationen ab, die der Sortiervorrichtung 25 zugeleitet werden. Zur Übermittlung dieser zusätzlichen Informationen ist die Sortiereinrichtung 25 mit der Schneidevorrichtung 17 verbunden. Es ist ebenso möglich, die Sortiereinrichtung 25 mit dem Steuermittel 15 zu verbinden und die Übermittlung der zusätzlichen Informationen über das Steuermittel 15 der Sortiereinrichtung 25 zuzuleiten. Die zusätzlichen Informationen, die zum Sortieren der einzelnen Bilder verwendet werden, können auftragsspezifische Daten sein. Alle Bilder, die von dem gleichen Auftrag stammen, werden beispielsweise in das gleiche Sortierfach verteilt.

Vorteilhafterweise können die zusätzlichen Informationen, die zum Sortieren der einzelnen Bilder in der Sortiereinrichtung 25 verwendet werden, bereits innerhalb der Marken enthalten sein. Solche Marken bezeichnet man als sog. codierte Marken, die an sich allgemein bekannt sind. Im vorliegenden Ausführungsbeispiel sind diese codierten Marken bereits mittels der Belichtungseinheit 13 auf das Fotopapier 22 aufgebracht worden. Die codierten Marken werden gleichzeitig zum Schneiden des bandförmigen Fotopapiers 22 in einzelne Bilder mittels der Schneidvorrichtung 17 und zum Sortieren der einzelnen Bilder innerhalb der Sortiereinrichtung 25 verwendet. Die codierten Marken können insbesondere auch als Auftragsanfangs- oder Auftragsendemarkierungen ausgestaltet sein. Eine solche Auftragsanfangsmarkierung wird von der Belichtungseinheit 13 vor oder hinter dem ersten Bild eines bestimmten zu belichtenden Auftrages und die Auftragsendemarke vor oder hinter dem letzten Bild eines bestimmten Auftrages gesetzt. Die Auftragsanfangs- bzw. Auftragsendemarke wird durch den Sensor 24 innerhalb der Schneidevorrichtung 17 detektiert und die Information über die Detektion der entsprechenden Marke an die Sortiervorrichtung 25 weitergegeben. Auf diese Weise können alle Bilder eines bestimmten Auftrages in das gleiche Sortierfach 26a, 26b oder 26c der Sortiereinrichtung 25 verteilt werden. Die auf das Fotopapier 22 aufgebrachten codierten Marken können ebenfalls andere Informationen enthalten, die beispielsweise für die Ablaufsteuerung innerhalb eines Fotofinishing-Labors, in dem ein System zum Herstellen von Bildem gemäß der Fig. 1 eingesetzt wird.

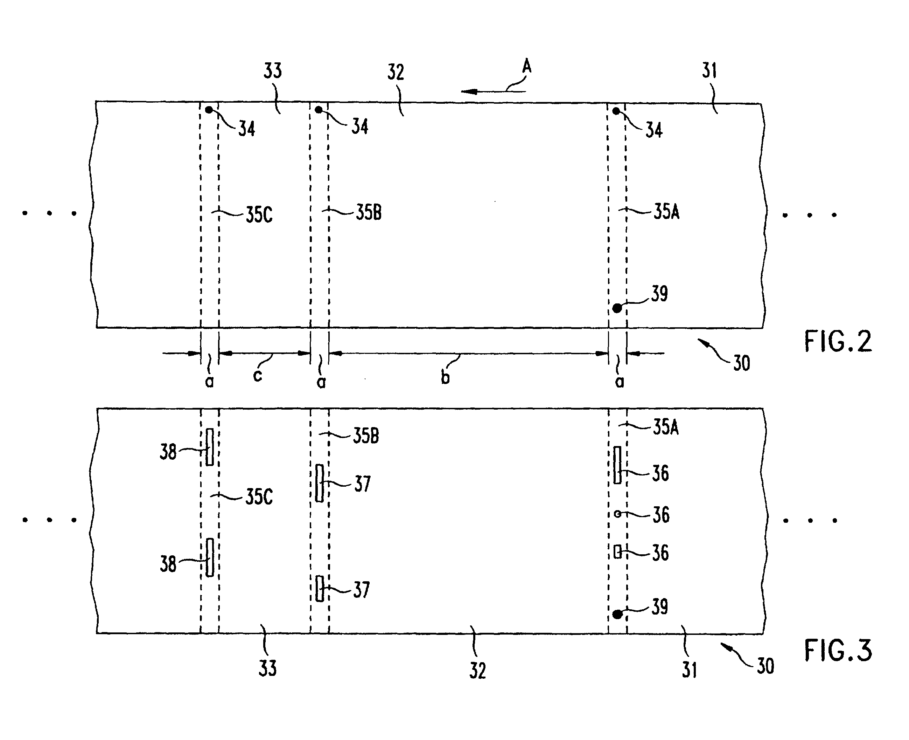

Die Figuren 2 und 3 zeigen zwei Beispiele von auf bandförmigem Fotopapier aufgebrachten Marken, die zum Schneiden des Fotopapiers verwendet werden können. Die Fig. 2 zeigt das erste Beispiel eines Auszuges aus einem bandförmigen Fotopapier 30, das mittels des Printers 20, wie er anhand der Fig. 1 beschrieben wurde, mit Bildinformationen, die einzelnen Bildern zugeordnet sind, belichtet wurde. Auf dem in der Fig. 2 dargestellten Auszug des bandförmigen Fotopapiers 30 sind drei Markierungsabschnitte 35A, 35B und 35C dargestellt. In diesen drei Markierungsabschnitten 35A - 35C ist jeweils eine Schneidemarke 34 auf das bandförmige Fotopapier 30 aufgebracht. Diese Schneidemarken 34 sind innerhalb der Markierungsabschnitte 35A - 35C an deren jeweiligem oberen Rand von dem Belichtungsmittel 13 in das bandförmige Fotopapier 30 einbelichtet.

Durch die in den drei Markierungsabschnitten 35A - 35C aufgebrachten Marken 34 werden Teilbereiche definiert, die für das Aufbelichten der Bildinformationen eines Bildes mittels der Belichtungseinheit 13 dienen. Rechts neben dem ersten Markierungsabschnitt 35A ist ein erster Teilbereich 31 dargestellt, der für das Aufbelichten des (n-1)ten-Bildes eines bestimmten Auftrages k verwendet werden soll oder bereits verwendet wurde, je nachdem, ob die jeweilige Marke 34 vor bzw. nach dem Aufbelichten der Bildinformationen erfolgt. n entspricht dabei der Anzahl der in dem Auftrag k enthaltenen Bilder. Links neben dem ersten Markierungsabschnitt 35A ist ein zweiter Teilbereich 32 auf dem bandförmigen Fotopapier 30 vorhanden, der für das Belichten eines n-ten Bildes des Auftrages k verwendet wird. Der zweite Teilbereich 32 wird durch den ersten Markierungsabschnitt 35A und den zweiten Markierungsabschnitt 35B gebildet. Der zweite Teilbereich 32 hat eine Länge b. Links neben dem zweiten Markierungsabschnitt 35B und der in diesem enthaltenen Marke 34 ist auf dem bandförmigen Fotopapier 30 ein dritter Teilbereich 33 vorhanden. Dieser dritte Teilbereich 33 dient zum Belichten des ersten Bildes eines folgenden Auftrages (k+1). Der dritte Teilbereich wird durch den zweiten Markierungsabschnitt 35B und den dritten Markierungsabschnitt 35C gebildet. Der dritte Teilbereich 33 hat eine Länge c.

Die Marken 34 sind hier jeweils runde Marken. Sie haben eine bestimmte Größe, durch die die Länge des jeweiligen Markierungsabschnittes 35A - 35C im wesentlichen bestimmt wird. Im vorliegenden Ausführungsbeispiel gemäß der Fig. 2 haben die Markierungsabschnitte 35A - 35C jeweils eine Länge a. Die Markierungsabschnitte 35A - 35C werden für das Aufbelichten von Bildinformationen nicht verwendet. Vielmehr werden die Markierungsabschnitte 35A - 35C nach dem Belichten der Bildinformationen in dem Printer 20 mit der Schneidevorrichtung 17 weggeschnitten. Die somit weggeschnittenen Markierungsabschnitte 35A -35C stellen daher Abfall dar. Aufgrund der vorliegenden Erfindung kann sowohl das Belichten der Marken 34 als auch das Schneiden des Fotopapiers 22 sehr exakt auf die Position der jeweiligen Bilder abgestimmt sein. Die Menge des bei der Herstellung der Bilder entstehenden Abfalls kann daher minimiert werden.

An dem unteren Rand des ersten Markierungsabschnittes 35A ist eine weitere Marke 39 aufgebracht, die ebenfalls als rundes Loch ausgestaltet ist. Diese Marke 39 dient als Auftragsendemarke. Mit der Auftragsendemarke 39 wird das letzte Bild des Auftrages gekennzeichnet. Im vorliegenden Beispiel ist der zweite Teilbereich 32 derjenige Bereich auf dem Fotopapier 30, der zum Aufbelichten des letzten Bildes n des Auftrages k dient. Bei dem späteren Sortieren der einzelnen Bilder innerhalb der Sortiereinrichtung 25 (Fig. 1) wird die zuvor detektierte Auftragsendemarke 39 dazu verwendet, das in den zweiten Teilbereich 32 aufbelichtete Bild als letztes Bild demjenigen Sortierfach 26a, 26b oder 26c zuzuführen, in das bereits die zuvor hergestellten Bilder des Auftrages k einsortiert wurden. Durch die Auftragsendemarke 39 kann gewährleistet werden, dass das in dem dritten Teilbereich 33 aufbelichtete Bild durch die Sortiereinrichtung 25 in ein anderes Sortierfach einsortiert wird. Auf diese Weise können die Bilder von verschiedenen Aufträgen einfach erkannt und voneinander getrennt sortiert werden.

Die Fig. 3 zeigt ein weiteres Beispiel eines Ausschnittes des bandförmigen Fotopapiers 30, in das mehrere Marken, die zum Schneiden verwendet werden, eingebracht sind. Die in der Fig. 3 dargestellten Marken sind als sog. codierte Marken ausgestaltet. In dem ersten Markierungsabschnitt 35A ist eine erste codierte Marke 36 aufgebracht. Diese erste codierte Marke 36 enthält im oberen Bereich des ersten Markierungsabschnittes 35A eine rechteckige, langgezogene Marke. Im mittleren Bereich des ersten Markierungsabschnittes 35A enthält die erste codierte Marke 36 eine runde Marke und im unteren Bereich eine rechteckige, kurze Marke. In dem zweiten Markierungsabschnitt 35B ist eine zweite codierte Marke 37 aufgebracht. Diese zweite codierte Marke 37 enthält ebenfalls im oberen Drittel des zweiten Markierungsabschnittes 35B eine rechteckige, langgezogene Marke. Im unteren Drittel des Markierungsabschnittes 35B ist eine rechteckige, kurze Marke eingebracht. Der dritte Markierungsabschnitt 35C enthält eine dritte codierte Marke 38. Diese enthält am oberen Rand und ebenfalls im unteren Drittel des dritten Markierungsabschnittes 35C eine rechteckige, langgezogene Marke.

Die Positionen der Marken 34 - 38 werden durch das Steuermittel 15 des erfindungsgemäßen Systems zum Herstellen von Bildern vorgegeben. Das Steuermittel 15 erfaßt diejenige Länge, die für das Belichten des zugehörigen Bildes auf das Fotopapier 30 benötigt wird.

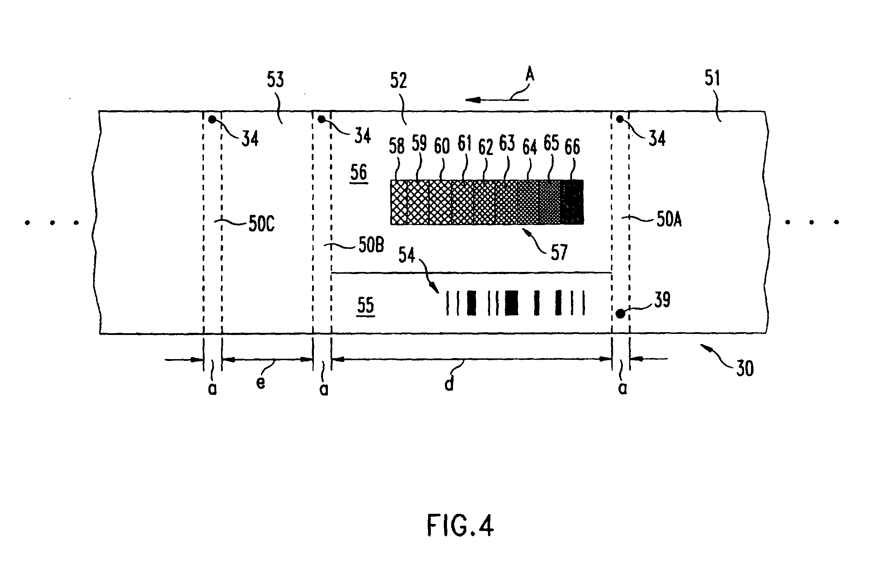

Fig.4 zeigt ein drittes Beispiel eines Ausschnittes des bandförmigen Fotopapiers 30. In diesen Ausschnitt des bandförmigen Fotopapiers 30 sind, wie bereits in der Fig. 2, mehrere Marken 34 aufgebracht, die zum Schneiden verwendet werden. Die auf den dargestellten Auszug aufgebrachten Informationen und Marken wurden mittels des in der Fig. 1 dargestellten und anhand dieser Fig. 1 beschriebenen Printers 20 auf das Fotopapier 30 aufbelichtet. Auf dem in der Fig. 4 dargestellten Auszug des bandförmigen Fotopapiers 30 sind drei Markierungsabschnitte 50A, 50B und 50C dargestellt. In diesen drei Markierungsabschnitten 50A-50C ist jeweils eine der Schneidemarken 34 aufgebracht. Diese Schneidemarken 34 sind innerhalb der Markierungsabschnitte 50A-50C an deren jeweiligem oberen Rand von dem Belichtungsmittel 13 (Fig. 1) in das bandförmige Fotopapier 30 einbelichtet worden.

Durch die in den drei Markierungsabschnitten 50A-50C aufgebrachten Marken 34 werden Teilbereiche definiert, die für das Aufbelichten von Bildinformationen eines Bildes oder von Testinformationen zum Überprüfen von mittels der Belichtungseinheit 13 aufbelichteten Bildinformationen dienen. Rechts neben dem ersten Markierungsabschnitt 50A ist ein Teilbereich 51 dargestellt, der für das Aufbelichten eines Bildes i eines bestimmten Auftrages j verwendet werden soll oder bereits verwendet wurde, je nachdem, ob die jeweilige Marke 34 vor bzw. nach dem Aufbelichten der Bildinformationen des Bildes i auf das Fotopapier 30 aufbelichtet wurde. Links neben dem ersten Markierungsabschnitt 50A ist ein weiterer Teilbereich 52 auf dem bandförmigen Fotopapier 30 vorhanden. Dieser weitere Teilbereich 52 ist in einen ersten, unteren Abschnitt 55 und einen zweiten, oberen Abschnitt 56 unterteilt. In dem zweiten, oberen Abschnitt 56 ist eine Testinformation 57 aufbelichtet. Die Testinformation 57 enthält hier verschiedene Graustufen 58-66, die rechteckförmig nebeneinander in den zweiten Abschnitt 56 einbelichtet sind. Die am linken Rand des Teilbereiches 52 angeordnete erste Graustufe 58 ist die hellste Graustufe und die am rechten Rand des Teilbereiches 52 angeordnete Graustufe 66 die dunkelste Graustufe. Die verschiedenen Graustufen 58-66 sind direkt aneinander mit von links nach rechts abnehmender Helligkeit angeordnet.

Die Testinformation 57 dient zum Überprüfen der Funktionsweise des Printers 20 und des dem Printer 20 nachgeschalteten Papierprozessors 16 (Fig. 1). Während des laufenden Betriebs verändert sich nämlich die Wirkungsweise insbesondere der in dem Papierprozessor 16 vorhandenen Chemikalien zum Entwickeln und Fixieren des Fotopapiers. Eine Auswertung der durch die Entwicklungs- und Fixierbäder des Papierprozessors 16 hindurch gelaufenen Testinformation 57 kann Grundlage für eine Korrektur der Belichtung des Fotopapiers 30 beim Erzeugen von Bildern mittels der Belichtungseinheit 13 sein. Über das Steuermittel 15 ist es möglich, wenn diesem Steuermittel 15 die Auswertergebnisse des Auswertens der Testinformation 57 zugeleitet werden, die Belichtung durch die Belichtungseinheit 13 entsprechend abzuändern. Die Belichtungsparameter für die Belichtung von Bildern mittels der Belichtungseinheit 13 können so an die veränderte Reaktion der Entwicklungs- und Fixierbäder in dem Papierprozessor 16 angepaßt werden.

Zum Kennzeichnen der Testinformation 57 ist in dem ersten Abschnitt 55 des Teilbereichs 52 eine Marke 54 zum Kennzeichnen der Testinformation 57 einbelichtet worden. Diese Marke 54 ist im vorliegenden Ausführungsbeispiel als Barcode ausgestaltet. Es ist aber ebenso möglich, die Marke 54 zum Kennzeichnen der Testinformation 57 auf andere Weise, beispielsweise als codierte Marke, wie sie anhand der Fig. 3 beschrieben wurde, auszugestalten. Der Barcode 54 enthält hier Informationen zur Identifizierung des Printers 20, mit denen ein Bezug zwischen der Testinformation 57 und der Belichtungseinheit 13 bzw. dem Printer 20 hergestellt wird, der die Testinformation 57 aufbelichtete. Der Barcode 54 kann des Weiteren Informationen über das Format des Fotopapiers 30 oder die Zeit enthalten, während der die Testinformation 57 auf das Fotopapier 30 aufbelichtet wurde.

Der Teilbereich 52 wird durch den Markierungsabschnitt 50A und den links von ihm angeordneten Markierungsabschnitt 50B gebildet. Der Teilbereich 52 hat eine Länge d. Links neben dem Markierungsabschnitt 50B und der in diesem enthaltenen Marke 34 ist auf dem bandförmigen Fotopapier 30 ein dritter Teilbereich 53 vorhanden. Dieser dritte Teilbereich 53 dient - wie der erste Teilbereich 51 - zum Belichten eines Bildes i+1 eines bestimmten Auftrages. Dieses in den dritten Teilbereich 53 zu belichtende Bild i+1 kann, wie das Bild i, das in den ersten Teilbereich 51 einbelichtet wird, dem Auftrag j angehören. In diesem Fall sind die Testinformation 57 und der Barcode 54 zwischen zwei Bilder einbelichtet, die dem gleichen Auftrag j angehören. Es ist aber ebenso möglich, die Testinformation 57 und den Barcode 54 genau an das Ende eines Auftrages anzuschließen. In diesem Fall würde das in den dritten Teilbereich 53 einzubelichtende Bild einem anderen Auftrag m angehören als das Bild i. Der dritte Teilbereich 53 wird durch den Markierungsabschnitt 50B und den links von dem Teilbereich 53 abgebildeten Markierungsabschnitt 50C gebildet. Der dritte Teilbereich 53 hat hier eine Länge e. In dem Fall, in dem die Testinformation 57 und der Barcode 54 an das Ende eines Auftrages angehängt werden, kann in dem Markierungsabschnitt 50B am unteren Ende des bandförmigen Fotopapiers 30 eine Auftragsendemarke eingebracht werden. Ebenso ist es weiterhin möglich, in dem Markierungsabschnitt 50A eine Auftragsanfangsmarke einzubelichten. Diese Auftragsanfangsmarke wird vorteilhafterweise wie die in dem Markierungsabschnitt 50B eingebrachte Auftragsendemarke an den unteren Rand des Fotopapiers 30 aufbelichtet. Die Marken 34 sind in dem vorliegenden Ausführungsbeispiel gemäß der Fig. 4 jeweils runde Marken. Insofern entsprechen sie denjenigen Marken, die bereits anhand des Ausführungsbeispiels gemäß der Fig. 2 beschrieben wurden. Die Markierungsabschnitte 50A-50C haben jeweils die Länge a.

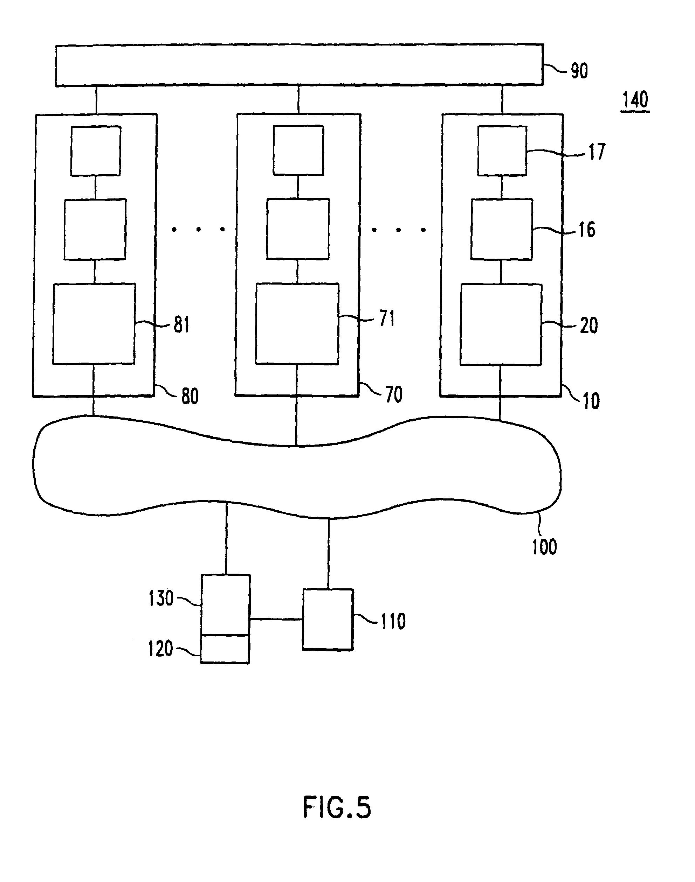

Fig. 5 zeigt ein Ausführungsbeispiel eines erfindungsgemäßen Systems 140 . Dieses System 140 enthält neben dem System 10 zum Herstellen von Bildern, wie es anhand des Ausführungsbeispiel gemäß der Fig. 1 beschrieben wurde, zwei weitere Systeme 70 und 80 zum Herstellen von Bildern, die wie das System 10 aufgebaut sind und die gleichen Funktionen ausführen können. Die beiden Systeme 70 und 80 sind ebenso wie das System 10 mit einem Netzwerk 100 verbunden. Dieses Netzwerk 100 kann beispielsweise ein öffentliches Kommunikationsnetz, wie beispielsweise das Internet, oder aber auch ein anderes, für die Öffentlichkeit nicht zugängliches Netzwerk, beispielsweise ein Local Area Network, LAN, sein.

Das System 70 enthält u. a. einen Printer 71, mit dem insbesondere Bildinformationen zum Erzeugen von Bildern aufbelichtet werden können. Entsprechendes gilt für das dritte System 80, das einen Printer 81 aufweist. Die Printer 71 und 81 entsprechen, von ihrem Aufbau her, dem Printer 20 des Systems 10. Die Ausgänge der Systeme 10, 70 und 80 sind jeweils mit einer Sortiereinrichtung 90 verbunden. Die aus den Systemen 10, 70 und 80 ausgegebenen Bilder können über diese Sortiereinrichtung 90 entsprechend so sortiert werden, dass Bilder eines Auftrages, die zuvor zum Belichten auf die verschiedenen Systeme 10, 70 und 80 verteilt wurden, nunmehr wieder zusammengefaßt werden.

An das Netzwerk 100 sind neben den Systemen 10, 70 und 80 ebenfalls ein Auswertemittel 130 und ein Detektionsmittel 120 geschaltet. Das Auswertemittel 130 dient zum Auswerten der von den Systemen 10, 70 und 80 auf das Fotopapier 30 aufgebrachten Testinformationen. Das Auswertemittel 130 kann insbesondere ein Densitometer sein. Densitometer sind Messgeräte, mit denen sich insbesondere die optische Dichte der auf das Fotopapier 30 aufbelichteten Testinformationen bestimmen läßt. Das direkt mit dem Auswertemittel 130 verbundene Detektionsmittel 120 ermittelt den den jeweiligen Testinformationen zugeordneten Barcode. Das Detektionsmittel 120 ist hier ein Barcode-Scanner. Die von dem Auswertemittel 130 und dem Detektionsmittel 120 gelesenen Informationen werden an ein Steuermittel 110 weitergeleitet, das sowohl mit dem Netzwerk 100 als auch mit dem Auswertemittel 130 verbunden ist. Das Steuermittel 110 steuert die von dem Auswertemittel 130 und dem Detektionsmittel 120 ermittelten Informationen so, dass die Printer 20, 71 und 81 zum Aufbelichten der Bildinformationen in Abhängigkeit von den ausgewerteten Testinformationen und der über die Barcodes ermittelten Zuordnung der jeweiligen Testinformationen zu den Printer 20, 71 und 81 eingestellt werden. Es ist gewährleistet, dass die jeweiligen Printer 20, 71 und 81 nur aufgrund derjenigen Testinformationen eingestellt werden, die jeweils von ihnen auf Fotopapier aufbelichtet wurden.

In den Ausführungsbeispielen gemäß den Fig. 4 und 5 wurde beschrieben, dass die Marke 54 zum Kennzeichnen der Testinformation 57 durch die Belichtungseinheit 13 aufbelichtet wurde. Diese Belichtungseinheit 13 sollte dabei ebenfalls die Testinformationen 57 sowie die Bildinformationen auf das Fotopapier 30 aufbelichten, die zum Erzeugen der Bilder der verschiedenen Aufträge benötigt werden. Es ist aber ebenso möglich, die Marke 54 über eine andere Ausgabeeinheit auf das Fotopapier 30 aufzubringen. Die Marke 54 kann beispielsweise auch mittels eines Rückseitendruckers auf die Rückseite des Fotopapiers 30 aufgebracht werden.

## Patentansprüche

1. Vorrichtung (20) zum Erzeugen von Bildern mit
- einer Ausgabeeinheit (13) zum Ausgeben von Bildinformationen, die mehreren Bildern zugeordnet sind, auf bandförmiges Aufzeichnungsmaterial (22) und
- einem Steuermittel (15) zum Erzeugen von Ansteuersignalen für ein Aufbringen von Marken (34, 36-39), die für ein Schneiden des bandförmigen Aufzeichnungsmaterials (22) verwendbar sind und die unmittelbar Schneidepositionen für das Schneiden vorgeben,
**dadurch gekennzeichnet, dass**
- die Ausgabeeinheit (13) zum Empfangen der Ansteuersignale mit dem Steuermittel (15) verbunden ist und
- die Ausgabeeinheit (13) so ausgestaltet ist, dass sie in Abhängigkeit von den Ansteuersignalen zusätzlich die zum Schneiden verwendbaren Marken (34, 36-39) auf das bandförmige Aufzeichnungsmaterial (22) aufbringt.

2. Vorrichtung nach einem der vorhergehenden Ansprüche, **dadurch gekennzeichnet, dass** die Ausgabeeinheit (13) so ausgestaltet ist, dass sie eine oder mehrere der zum Schneiden verwendbaren Marken als codierte Marken (36-39) auf das bandförmige Aufzeichnungsmaterial (22) aufbringt, und diese codierten Marken (36-39) zusätzliche Informationen enthalten.

3. Vorrichtung nach Anspruch 2, **dadurch gekennzeichnet, dass** die Ausgabeeinheit (13) wenigstens eine der codierten Marken (36-39) als Auftragsanfangs- oder Auftragsendemarke (39) ausgestaltet auf das bandförmige Aufzeichnungsmaterial (22) aufbringt, und diese Marke (36-39) das erste oder das letzte auszugebende Bild eines Auftrags angibt.

4. Vorrichtung (20) zum Erzeugen von Bildern mit
- einer Ausgabeeinheit (13) zum Ausgeben von Bildinformationen, die mehreren Bildern zugeordnet sind, auf bandförmiges Aufzeichnungsmaterial (22),
**dadurch gekennzeichnet, dass**
- die Vorrichtung ein Steuermittel (15) zum Erzeugen von Ansteuersignalen für ein Aufbringen von Marken (54) aufweist, die für ein Kennzeichnen von Testinformationen (57) verwendbar sind, wobei mittels der Testinformationen (57) das Ausgeben der Bildinformationen überprüfbar ist,
- die Ausgabeeinheit (13) zum Empfangen der Ansteuersignale mit dem Steuermittel (15) verbunden ist und
- die Ausgabeeinheit (13) so ausgestaltet ist, dass sie in Abhängigkeit von den Ansteuersignalen sowohl die Testinformationen (57) als auch die zum Kennzeichnen der Testinformationen (57) verwendbaren Marken (54) auf das bandförmige Aufzeichnungsmaterial (22) aufbringt.

5. Vorrichtung nach Anspruch 4, **dadurch gekennzeichnet, dass** die Marken (54), die für das Kennzeichnen von Testinformationen (57) verwendbar sind, wenigstens eine Identifizierungsinformation über die Vorrichtung (20) enthalten.

6. Vorrichtung nach Anspruch 4 oder Anspruch 5, **dadurch gekennzeichnet, dass** die Marken (54), die für das Kennzeichnen von Testinformationen (57) verwendbar sind, wenigstens einen Barcode enthalten.

7. Vorrichtung nach einem der Ansprüche 4-6, **dadurch gekennzeichnet, dass** die Testinformationen (57) verschiedene Graustufen enthalten.

8. Vorrichtung nach einem der Ansprüche 4-7, **dadurch gekennzeichnet, dass** das Steuermittel (15) weiterhin zum Erzeugen von Ansteuersignalen für ein Aufbringen von Marken (34, 36-39), die für ein Schneiden des bandförmigen Aufzeichnungsmaterials (22) verwendbar sind, ausgestaltet ist und die Ausgabeeinheit (13) so ausgestaltet ist, dass sie in Abhängigkeit von diesen Ansteuersignalen für das Aufbringen von Marken (34, 36-39), die für das Schneiden des bandförmigen Aufzeichnungsmaterials (22) verwendbar sind, zusätzlich die zum Schneiden verwendbaren Marken (34, 36-39) auf das bandförmige Aufzeichnungsmaterial (22) aufbringt.

9. Vorrichtung nach einem der vorhergehenden Ansprüche, **dadurch gekennzeichnet, dass** die Ausgabeeinheit (13) die Bildinformationen zeilenweise ausgibt.

10. Vorrichtung nach einem der vorhergehenden Ansprüche, **dadurch gekennzeichnet, dass** die Ausgabeeinheit (13) ein Belichtungsmittel zum Belichten von lichtempfindlichem Aufzeichnungsmaterial aufweist.

11. Vorrichtung nach Anspruch 10, **dadurch gekennzeichnet, dass** die Ausgabeeinheit (13) Laser aufweist.

12. Vorrichtung nach einem der vorhergehenden Ansprüche, **dadurch gekennzeichnet, dass** sie ein Transportmittel (11, 14) zum Transportieren des bandförmigen Aufzeichnungsmaterials (22) aufweist und die Ausgabeeinheit (13) so ausgestaltet ist, dass die Marken (34, 36-39) auf dem bandförmigen Aufzeichnungsmaterial (22) exakt aufgebracht werden, während das Transportmittel (11, 14) das bandförmige Aufzeichnungsmaterial (22) im Bereich des Ausgabemittels (13) transportiert.

13. Verfahren zum Erzeugen von Bildern, bei dem
- Bildinformationen, die mehreren Bildern zugeordnet sind, von einer Ausgabeeinheit (13) auf bandförmiges Aufzeichnungsmaterial (22) ausgegeben werden und
- Ansteuersignale für ein Aufbringen von Marken (34, 36-39), die für ein Schneiden des bandförmigen Aufzeichnungsmaterials (22) verwendbar sind und die unmittelbar Schneidepositionen für das Schneiden vorgeben, von einem Steuermittel (15) erzeugt werden,
**dadurch gekennzeichnet, dass**
- die von dem Steuermittel (15) erzeugten Ansteuersignale von der Ausgabeeinheit (13) empfangen werden und
- die zum Schneiden verwendbaren Marken (34, 36-39) in Abhängigkeit von den Ansteuersignalen von der Ausgabeeinheit (13) auf das bandförmige Aufzeichnungsmaterial (22) aufgebracht werden.

14. Verfahren zum Erzeugen von Bildern, bei dem
- Bildinformationen, die mehreren Bildern zugeordnet sind, von einer Ausgabeeinheit (13) auf bandförmiges Aufzeichnungsmaterial (22) ausgegeben werden,
**dadurch gekennzeichnet, dass**
- Ansteuersignale für ein Aufbringen von Marken (54), die für ein Kennzeichnen von Testinformationen (57) verwendbar sind, wobei mittels der Testinformationen (57) das Ausgeben der Bildinformationen überprüfbar ist, von einem Steuermittel (15) erzeugt werden,
- die von dem Steuermittel (15) erzeugten Ansteuersignale von der Ausgabeeinheit (13) empfangen werden und
- sowohl die Testinformationen (57) als auch die zum Kennzeichnen der Testinformationen verwendbaren Marken (54) in Abhängigkeit von den Ansteuersignalen von der Ausgabeeinheit (13) auf das bandförmige Aufzeichnungsmaterial (22) aufgebracht werden.

15. System (10) zum Herstellen von Bildern mit
- einer Vorrichtung (20) zum Erzeugen von Bildern nach einem der Ansprüche 1 bis 7 oder nach Anspruch 12,
- einem Detektionsmittel (24) zum Detektieren der auf das bandförmige Aufzeichnungsmaterial (22) aufgebrachten Marken (34, 36-39), die für das Schneiden des bandförmigen Aufzeichnungsmaterials (22) verwendbar sind, und
- einer Schneidevorrichtung (17) zum Schneiden des bandförmigen Aufzeichnungsmaterials (22), auf das die Bildinformationen ausgegeben wurden, in einzelne Bilder, wobei
- die Schneidevorrichtung (17) so ausgestaltet ist, dass sie das bandförmige Aufzeichnungsmaterial (22) in Abhängigkeit von dem Detektieren der Marken (34, 36-39) mittels des Detektionsmittels (24) unmittelbar an derjenigen Position schneidet, an der die Marken auf das bandförmige Aufzeichnungsmaterial aufgebracht sind.

16. System nach Anspruch 15, **dadurch gekennzeichnet, dass** das Detektionsmittel (23, 24) im Bereich der Schneidevorrichtung (17) angeordnet ist.

17. System nach Anspruch 15 oder 16, **dadurch gekennzeichnet, dass** es eine Sortiereinrichtung (25) zum Sortieren der einzelnen Bilder aufweist, die die einzelnen Bilder in Abhängigkeit von den zusätzlichen Informationen der codierten Marken (36-39) sortiert.

18. System (10) zum Herstellen von Bildern mit
- einer Vorrichtung (20, 71, 81) zum Erzeugen von Bildern nach einem der Ansprüche 8 bis 12,
- einem Auswertemittel (130) zum Auswerten der auf das bandförmige Aufzeichnungsmaterial (22) aufgebrachten Testinformationen (57) und
- einem Detektionsmittel (120) zum Detektieren der auf das bandförmige Aufzeichnungsmaterial (22) aufgebrachten Marken (54) zum Kennzeichnen der Testinformationen (57) und
- einem Einstellmittel (15) zum Einstellen des Ausgebens der Bildinformationen durch die Vorrichtung (20, 71, 81) in Abhängigkeit von dem Auswerten der Testinformationen (57) und dem Detektieren der Marken (54) zum Kennzeichnen der Testinformationen (57).

19. System (10) nach Anspruch 18, **dadurch gekennzeichnet, dass** es mehrere Vorrichtungen (20, 71, 81 ) nach einem der Ansprüche 8 bis 12 enthält.

20. System nach Anspruch 18 oder Anspruch 19, **dadurch gekennzeichnet, dass** das Auswertemittel (130) über ein Netzwerk (100) mit der Vorrichtung oder den mehreren Vorrichtungen (20, 71, 81) verbunden ist.

21. System nach einem der Ansprüche 18-20, **dadurch gekennzeichnet, dass** das Auswertemittel (130) ein Densitometer ist.

## Claims

1. Device (20) for generating images comprising
- an output unit (13) for outputting image information, associated with a plurality of images, onto web-shaped recording material (22) and
- a control means (15) for generating control signals for application of marks (34, 36 to 39), which can be used for cutting the web-shaped recording material (22) and which stipulate the immediate cutting positions for cutting,
**characterised in that**
- the output unit (13) is connected to the control means (15) for receiving the control signals and
- the output unit (13) is configured in such a way that it additionally applies the marks (34, 36 to 39), which can be used for cutting, to the web-shaped recording material (22) as a function of the control signals.

2. Device according to any of the preceding claims, **characterised in that** the output unit (13) is configured in such a way that it applies one or more of the marks, which can be used for cutting, as coded marks (36 to 39) to the web-shaped recording material (22) and these coded marks (36 to 39) contain additional information.

3. Device according to claim 2, **characterised in that** the output unit (13) applies at least one of the coded marks (36 to 39) as application start or end mark (39) to the web-shaped recording material (22) and this mark (36 to 39) indicates the first or last image of a job to be output.

4. Device (20) for generating images comprising
- an output unit (13) for outputting image information associated with a plurality of images, onto web-shaped recording material (22), **characterised in that**
- the device comprises a control means (15) for generating control signals for application of marks (54), which can be used for indicating test information (57), wherein outputting of image information can be checked by means of the test information (57),
- the output unit (13) is connected to the control means (15) for receiving the control signals and
- the output unit (13) is configured in such a way that it applies the test information (57) and the marks (54), which can be used for indicating the test information (57), to the web-shaped recording material (22), as a function of the control signals.

5. Device according to claim 4, **characterised in that** the marks (54), which can be used for indicating test information (57), contain at least one piece of identification information about the device (20).

6. Device according to claim 4 or 5, **characterised in that** the marks (54), which can be used for indicating test information (57), contain at least one bar code.

7. Device according to any of claims 4 to 6, **characterised in that** the test information (57) contains various grey stages.

8. Device according to any of claims 4 to 7, **characterised in that** the control means (15) is also configured for generating control signals for application of marks (34, 36 to 39) which can be used for cutting of the web-shaped recording material (22), and the output unit (13) is configured in such a way that it additionally applies the marks (34, 36 to 39) which can be used for cutting, to the web-shaped recording material (22) as a function of these control signals for the application of marks (34, 36 to 39) which can be used for cutting the web-shaped recording material (22).

9. Device according to any of the preceding claims, **characterised in that** the output unit (13) outputs the image information line by line.

10. Device according to any of the preceding claims, **characterised in that** the output unit (13) comprises an exposure means for exposing light-sensitive recording material.

11. Device according to claim 10, **characterised in that** the output unit (13) comprises lasers.

12. Device according to any of the preceding claims, **characterised in that** it comprises a conveying means (11, 14) for conveying the web-shaped recording material (22) and the output unit (13) is configured in such a way that the marks (34, 36 to 39) are applied exactly to the web-shaped recording material (22) while the conveying means ( 11, 14) conveys the web-shaped recording material (22) in the region of the output means (13).

13. Process for producing images in which
- image information associated with a plurality of images is output by an output unit (13) onto web-shaped recording material (22) and
- control signals for application of marks (34, 36 to 39) which can be used for cutting the web-shaped recording material (22) and stipulate the immediate cutting positions for cutting, are generated by a control means (15),
**characterised in that**
- the control signals generated by the control means (15) are received by the output unit (13) and
- the marks (34, 36 to 39), which can be used for cutting, are applied to the web-shaped recording material (22) as a function of the control signals from the output unit (13).

14. Process for producing images in which
- image information associated with a plurality of images is output by an output unit (13) onto web-shaped recording material (22), **characterised in that**
- control signals for application of marks (54), which can be used for indicating test information (57), wherein outputting of image information can be checked by means of the test information (57) are generated by a control means (15),
- the control signals generated by the control means (15) are received by the output unit (13) and
- both the test information (57) and the marks (54) which can be used to indicate the test information are applied to the web-shaped recording material (22) as a function of the control signals from the output unit (13).

15. System (10) for producing images comprising
- a device (20) for generating images according to any of claims 1 to 7 or according to claim 12,
- a detecting means (24) for detecting the marks (34, 36 to 39) applied to the web-shaped recording material (22), which can be used for cutting the web-shaped recording material (22), and
- a cutting device (17) for cutting the web-shaped recording material (22) on which the image information has been output, into individual images, wherein
- the cutting device (17) is configured in such a way that it cuts the web-shaped recording material (22) as a function of detection of the marks (34, 36 to 39) by means of the detecting means (24) directly at the position at which the marks are applied to the web-shaped recording material.

16. System according to claim 15, **characterised in that** the detecting means (23, 24) are arranged in the region of the cutting device (17).

17. System according to claim 15 or 16, **characterised in that** it comprises a sorting device (25) for sorting the individual images, which sorts the individual images as a function of the additional information of the coded marks (36 to 39).

18. System (10) for producing images comprising
- a device (20, 71, 81) for generating images according to any of claims 8 to 12,
- an evaluation means (130) for evaluating the test information (57) applied to the web-shaped recording material (22) and
- a detecting means (120) for detecting the marks (54) applied to the web-shaped recording material (22) for indicating the test information (57) and
- an adjusting means (15) for adjusting outputting of the image information by the device (20, 71, 81) as a function of the evaluation of the test information (57) and detection of the marks (54) for indicating the test information (57).

19. System (10) according to claim 18, **characterised in that** it contains a plurality of devices (20, 71, 81) according to any of claims 8 to 12.

20. System according to claim 18 or 19, **characterised in that** the evaluating means (130) is connected via a network (100) to the device or the plurality of devices (20, 71, 81).

21. System according to any of claims 18 to 20, **characterised in that** the evaluating means (130) is a densitometer.

## Revendications

1. Dispositif (20) pour produire des images comportant
- une unité de sortie (13) pour sortir des informations d'image, qui sont associées à plusieurs images, sur un matériau d'enregistrement (22) en forme de ruban et
- un moyen de commande (15) pour produire des signaux de commande en vue d'une application de repères (34, 36 à 39) qui sont utilisables pour une coupe du matériau d'enregistrement en forme de ruban (22) et qui prescrivent directement des positions de coupe pour la coupe,
**caractérisé en ce que**
- l'unité de sortie (13) est reliée au moyen de commande (15) pour la réception des signaux de commande et
- l'unité de sortie (13) est conçue de telle sorte que, en fonction des signaux de commande, elle applique en plus les repères (34, 36 à 39) utilisables pour la coupe sur le matériau d'enregistrement en forme de ruban (22).

2. Dispositif selon la revendication précédente, **caractérisé en ce que** l'unité de sortie (13) est conçue de telle sorte qu'elle applique un ou plusieurs repères utilisables pour la coupe sous forme de repères codés (36 à 39) sur le matériau d'enregistrement en forme de ruban (22) et que ces repères codés (36 à 39) contiennent des informations supplémentaires.

3. Dispositif selon la revendication 2, **caractérisé en ce que** l'unité de sortie (13) applique au moins l'un des repères codés (36 à 39) comme repère de début d'enregistrement ou de fin d'enregistrement (39) sur le matériau d'enregistrement en forme de ruban (22) et ce repère (36 à 39) indique la première ou la dernière image à sortir d'un enregistrement.

4. Dispositif (20) pour produire des images comportant
- une unité de sortie (13) pour sortir des informations d'image, qui sont associées à plusieurs images, sur un matériau d'enregistrement (22) en forme de ruban,
**caractérisé en ce que**
- le dispositif comporte un moyen de commande (15) pour produire des signaux de commande en vue d'une application de repères (54) qui sont utilisables pour une caractérisation d'informations de test (57), la sortie des informations d'image pouvant être vérifiée au moyen des informations de test (57),
- l'unité de sortie (13) est reliée au moyen de commande (15) pour la réception des signaux de commande et
- l'unité de sortie (13) est conçue de telle sorte que, en fonction des signaux de commande, elle applique aussi bien les informations de test (57) que les repères (54) utilisables pour la caractérisation des informations de test (57) sur le matériau d'enregistrement en forme de ruban (22).

5. Dispositif selon la revendication 4, **caractérisé en ce que** les repères (54) qui sont utilisables pour la caractérisation d'informations de test (57) contiennent au moins une information d'identification concernant le dispositif (20).

6. Dispositif selon la revendication 4 ou la revendication 5, **caractérisé en ce que** les repères (54) qui sont utilisables pour la caractérisation d'informations de test (57) contiennent au moins un code-barres.

7. Dispositif selon l'une des revendications 4 à 6, **caractérisé en ce que** les informations de test (57) contiennent différentes échelles des gris.

8. Dispositif selon l'une des revendications 4 à 7, **caractérisé en ce que** le moyen de commande (15) est aussi conçu pour produire des signaux de commande en vue d'une application de repères (34, 36 à 39) qui sont utilisables pour une coupe du matériau d'enregistrement en forme de ruban (22) et **en ce que** l'unité de sortie (13) est conçue de telle sorte que, en fonction de ces signaux de commande pour l'application de repères (34, 36 à 39) qui sont utilisables pour la coupe du matériau d'enregistrement en forme de ruban (22), elle applique en plus les repères (34, 36 à 39) utilisables pour la coupe sur le matériau d'enregistrement en forme de ruban (22).

9. Dispositif selon l'une des revendications précédentes, **caractérisé en ce que** l'unité de sortie (13) sort les informations d'image ligne par ligne.

10. Dispositif selon l'une des revendications précédentes, **caractérisé en ce que** l'unité de sortie (13) comporte un moyen d'exposition à la lumière pour exposer à la lumière un matériau d'enregistrement photosensible.

11. Dispositif selon la revendication 10, **caractérisé en ce que** l'unité de sortie (13) comporte un laser.

12. Dispositif selon l'une des revendications précédentes, **caractérisé en ce qu'**il comporte un moyen de transport (11, 14) pour transporter le matériau d'enregistrement en forme de ruban (22) et **en ce que** l'unité de sortie (13) est conçue de telle sorte que les repères (34, 36 à 39) sont appliqués précisément sur le matériau d'enregistrement en forme de ruban (22) pendant que le moyen de transport (11, 14) transporte le matériau d'enregistrement en forme de ruban (22) dans la zone du moyen de sortie (13).

13. Procédé pour produire des images, dans lequel
- des informations d'image qui sont associées à plusieurs images sont sorties par une unité de sortie (13) sur un matériau d'enregistrement en forme de ruban (22) et
- des signaux de commande pour une application de repères (34, 36 à 39) qui sont utilisables pour une coupe du matériau d'enregistrement en forme de ruban (22) et qui prescrivent directement des positions de coupe pour la coupe sont produits par un moyen de commande (15),
**caractérisé en ce que**
- les signaux de commande produits par le moyen de commande (15) sont reçus par l'unité de sortie (13) et
- les repères (34, 36 à 39) utilisables pour la coupe sont appliqués en fonction des signaux de commande par l'unité de sortie (13) sur le matériau d'enregistrement en forme de ruban (22).

14. Procédé pour produire des images, dans lequel
- des informations d'image qui sont associées à plusieurs images sont sorties par une unité de sortie (13) sur un matériau d'enregistrement en forme de ruban (22),
**caractérisé en ce que**
- des signaux de commande pour une application de repères (54) qui sont utilisables pour une caractérisation d'informations de test (57) sont produits par un moyen de commande (15), la sortie des informations d'image pouvant être vérifiée au moyen des informations de test (57),
- les signaux de commande produits par le moyen de commande (15) sont reçus par l'unité de sortie (13) et
- aussi bien les informations de test (57) que les repères (54) utilisables pour la caractérisation des informations de test sont appliqués en fonction des signaux de commande par l'unité de sortie (13) sur le matériau d'enregistrement en forme de ruban (22).

15. Système (10) pour fabriquer des images avec
- un dispositif (20) pour produire des images selon l'une des revendications 1 à 7 ou selon la revendication 12,
- un moyen de détection (24) pour détecter les repères (34, 36 à 39) qui sont appliqués sur le matériau d'enregistrement en forme de ruban (22) et qui sont utilisables pour la coupe du matériau d'enregistrement en forme de ruban (22), et
- un dispositif de coupe (17) pour couper le matériau d'enregistrement en forme de ruban (22), sur lequel les informations d'image ont été sorties, en images individuelles,
- le dispositif de coupe (17) étant conçu de telle sorte qu'il coupe le matériau d'enregistrement en forme de ruban (22) en fonction de la détection des repères (34, 36 à 39) au moyen du moyen de détection (24) directement à la position à laquelle les repères sont appliqués sur le matériau d'enregistrement en forme de ruban.

16. Système selon la revendication 15, **caractérisé en ce que** le moyen de détection (23, 24) est placé dans la zone du dispositif de coupe (17).

17. Système selon la revendication 15 ou 16, **caractérisé en ce qu'**il comporte un dispositif de tri (25) qui est destiné au tri des images individuelles et qui trie les images individuelles en fonction des informations supplémentaires des repères codés (36 à 39).

18. Système (10) pour fabriquer des images comportant
- un dispositif (20, 71, 81) pour produire des images selon l'une des revendications 8 à 12,
- un moyen d'évaluation (130) pour évaluer les informations de test (57) appliquées sur le matériau d'enregistrement en forme de ruban (22), et
- un moyen de détection (120) pour détecter les repères (54) appliqués sur le matériau d'enregistrement en forme de ruban (22) en vue de la caractérisation des informations de test (57) et
- un moyen de réglage (15) pour régler la sortie des informations d'image par le dispositif (20, 71, 81) en fonction de l'évaluation des informations de test (57) et de la détection des repères (54) destinés à la caractérisation des informations de test (57).

19. Système (10) selon la revendication 18, **caractérisé en ce qu'**il contient plusieurs dispositifs (20, 71, 81) selon l'une des revendications 8 à 12.

20. Système selon la revendication 18 ou la revendication 19, **caractérisé en ce que** le moyen d'évaluation (130) est relié par l'intermédiaire d'un réseau (100) au dispositif ou aux dispositifs (20, 71, 81).

21. Système selon l'une des revendications 18 à 20, **caractérisé en ce que** le moyen d'évaluation (130) est un densitomètre.
